# EUROPEAN PATENT APPLICATION

(11) **EP 2 880 974 A1**
(43) Date of publication of application: **10.06.2015**
(21) Application number: 14386031.0
(22) Date of filing: 04.12.2014
(51) Int. Cl.: A01K 47/06, A01K 51/00

(54) **Hybrid detachable ventilated beehive base**

(30) Priority: 04.12.2013 GR 20130100673
(71) Applicant: Chalvatzoglou, Ioannis, 55236 Pylaia-Chortiatis (GR)
(72) Inventor: Chalvatzoglou, Ioannis, 55236 Pylaia-Chortiatis (GR)

(57) **Abstract**

The present invention relates to an assembled hybrid construction of a ventilated beehive base. The innovative construction concept provides significant technical advantages, relating both to the quality and performance of the product, while facilitating a low production cost. The main elements of the invention (hybrid detachable ventilated beehive base (1) are: wooden bases (2), perpendicular nerves (3), bent sheets (4), bent sheets (5), sieve (6), welding plates (7), wooden doors (8), locks (9), terraces (10), connectors (11), wooden sieve top (12) and rubber treads (13). An alternative bee port handling solution is based on four curved plates (15) screwed in pairs of two on the wooden base (2), right and left to bee entrance ports (17), permitting the sliding movement of perforated sheets (16).

## Description

The present invention relates to an assembled hybrid construction of a ventilated beehive base. The innovative construction concept provides significant technical advantages, relating both to the quality and performance of the product, while facilitating a low production cost.

Hitherto, beehives are constructed either in a single part or as an assembly of multiple modules. Assembled beehives have established themselves in the market, as they provide greater flexibility. Modern beekeeping requires beehives with a removable base, as this eases several beekeeper's operations, cleaning, combining beehives etc. Existing bases however, fabricated out of wood or plastic, have serious shortcomings. Wooden bases exhibit decreased mechanical strength and significant wear over time (they may break or rot), while plastic ones cannot be disinfected by traditional means (burning) as they polymerize. Another limitation of plastic bases, is that they cannot be used for organic beekeeping.

The proposed invention relates to a hybrid construction of a ventilated beehive base assembled from multiple parts. An innovative construction concept offers significant technical improvements, both in the strength and performance of the cell, allowing the full exploitation of the state of art in beekeeping. The main advantages of the invention can be summarized in the following: ease of disinfection (burning), excellent ventilation of the hive, increased mechanical strength of the beehive base even for long exposure to humid environments (no weakening due to fracture, rotting or corrosion), low production cost, easy assembly-disassembly to the hive while facilitating safe and simple mobility of the cell. Furthermore, the removable ventilated base, having two independent access points (bee entrances), can be combined with a cell having two separate bee chambers (i.e. two queens). The novelty of the invention lies in the fact that the construction combines materials that are widely available and can be obtained at a relatively low cost, such as high-strength wood (plywood) and galvanized sheet metal. This allows the use of high quality materials while reducing the fabrication costs by avoiding unnecessary machining. Metal plates are used to create a rugged framework, providing sufficient strength of the base, enabling it even to withstand loads associated to high drops. This construction facilitates maximum exposure without compromises as to the mechanical strength of the hybrid beehive base. These type of openings would not be possible in a base constructed entirely out of wood, as it would result in a mechanically weak base. Wide openings translate in better ventilation during transport, where the cells are stacked in piles for hours. Wider openings also ensure the absence of increased moisture levels, thus reducing the morbidity of diseases associated among others to bee mites like the "Varroa destructor". The presence of parasitic mites, within the hive, can be dealt with in multiple ways through the ventilated base. Mites can be removed ecologically, or by using formulations which do not kill but provoke mite falling (icing sugar, addition of herbal ingredients in smokers etc.), or natural decline due to the ability observed in beehives to physical remove part of the existing varroa load. Once mites fall out outside the cell, they do not remain at the hive bottom thus avoiding recontamination. The larger the ventilation, the better the result. Bottom side ventilation is based on the same concept as in old traditional bases, while the sieve provides increased protection of the beehive against external hazards. The plywood used in the wooden parts of the hybrid base provides unparalleled mechanical strength and thus a long life-span even in harsh climate conditions. These wooden parts also provide protection of the entrance terraces, which are prone to excessive damage during transportation, handling or storing of the cells.
Figure 1 illustrates a perspective view of a conventional purely wooden and dividable beehive, incorporating a detachable base.
Figure 2 shows a perspective view of the assembled hybrid ventilated beehive base, indicating all components of the construction.
Figure 3 displays a perspective "explosion" view of the construction, providing information about how the individual components, of the hybrid ventilated beehive base, are assembled.
Figure 4 exhibits the newly designed connector for the metallic framework of the hybrid ventilated beehive base.
Figure 5 demonstrates an alternative solution for the bee handling ports of the hybrid ventilated beehive base.
Figure 6 shows a perspective "explosion" view of the construction providing information about how the individual components, of the hybrid ventilated beehive base, are assembled when using the alternative bee handling ports.

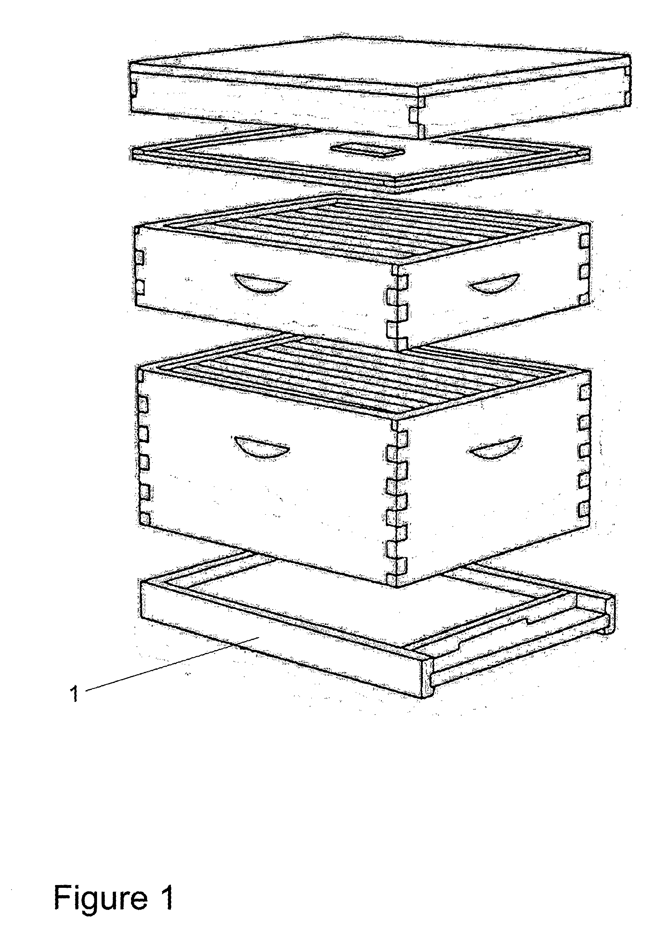

A perspective view of a beehive with a detachable hybrid ventilated base (1) is shown in Figure 1. No information is presented about the other compartments of the cell, as they are not part of the invention. The present invention can be assembled to any type of cell with a simple adjustment of its dimensions. The existence of various types of fasteners ensures a stable interconnection of the chambers of the cell, both during installation and transport.

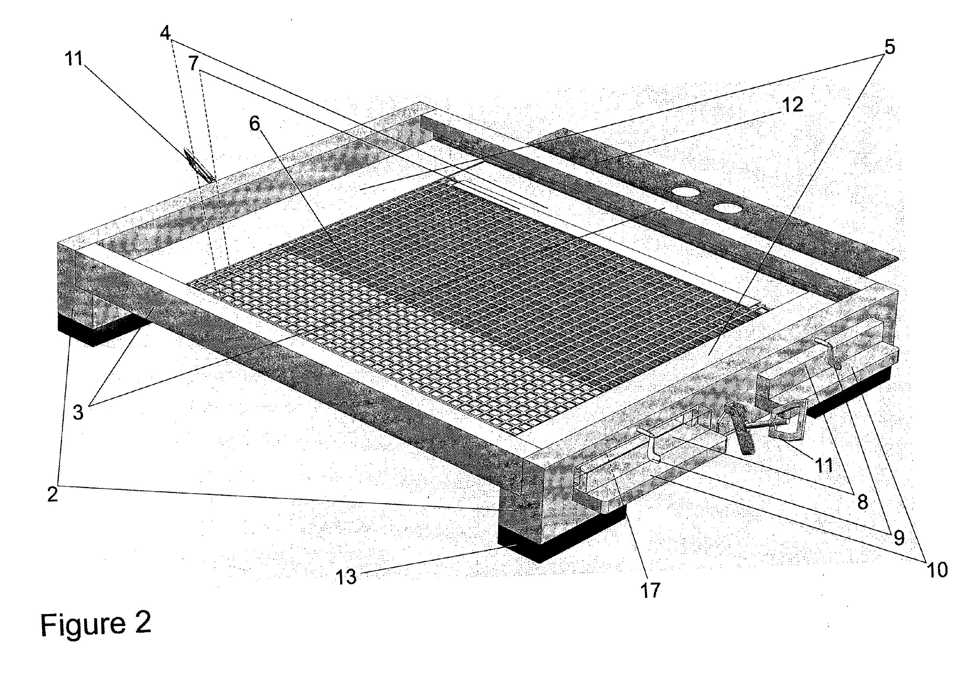

The main elements of the invention (hybrid detachable ventilated beehive base (1)), illustrated in perspective view in Figure 2, are: wooden bases (2), perpendicular nerves (3), bent sheets (4), bent sheets (5), sieve (6), welding plates (7), wooden doors (8), locks (9), terraces (10), connectors (11), wooden sieve top (12), and rubber treads (13).

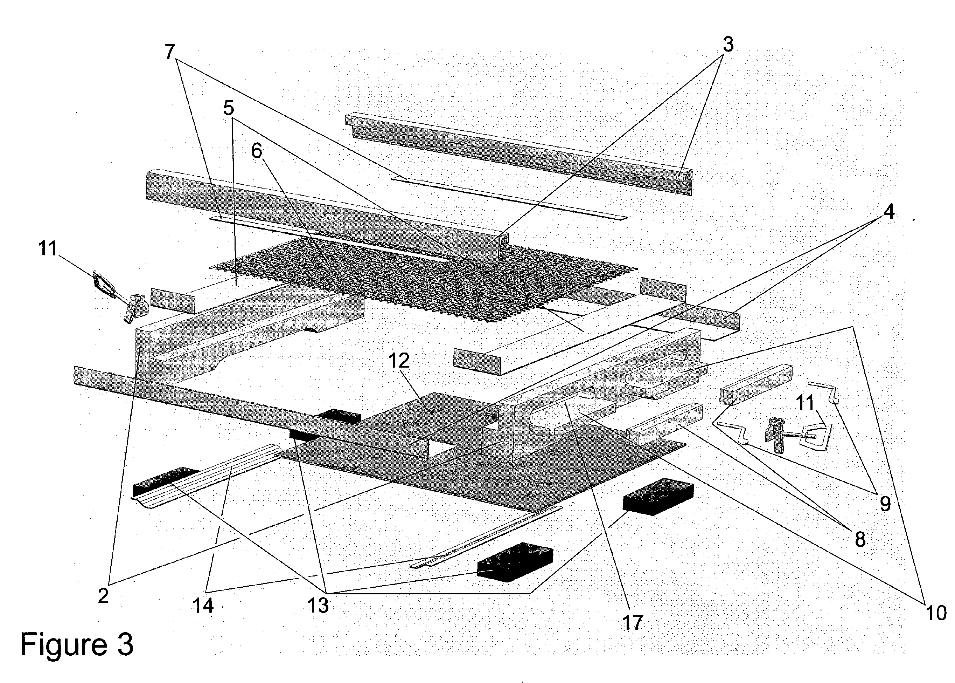

A perspective "explosion" view of the construction is illustrated in Figure 3, providing information about how the individual components of the hybrid detachable ventilated beehive base (1) are assembled together. The bent sheets (4) and (5) are aligned and then pushed into the corresponding vertical slots of the perpendicular nerves (3) to form an orthogonal, which are then screwed on the two wooden bases (2). Following this, welding plates (7) are welded onto the upper side of the bent sheets (4), providing superior support for the sieve (6). The curved sheets (14) are then welded onto the inferior surfaces of the bent sheets (5), holding the sieve (6) in place, while allowing a sliding movement of the wooden sieve top (12). Manual locks (9) are screwed onto the wooden base (2) right above the bee entrance ports (17), thus allowing the positioning and secure locking of the wooden plugs (8) to confine the bees (e.g. during transposing of the beehive). The left wooden plug (8) is illustrated as transparent so to reveal the bee entrance port (17) of the wooden base (2). Finally, the connectors (11) are placed onto the wooden base (2) allowing the assembly of the hybrid detachable ventilated beehive base (1) to the rest of the cell. The terraces (10) in front of each door, serve as a landing platforms for the bees allowing them to smoothly reach the cell before entering the hive.

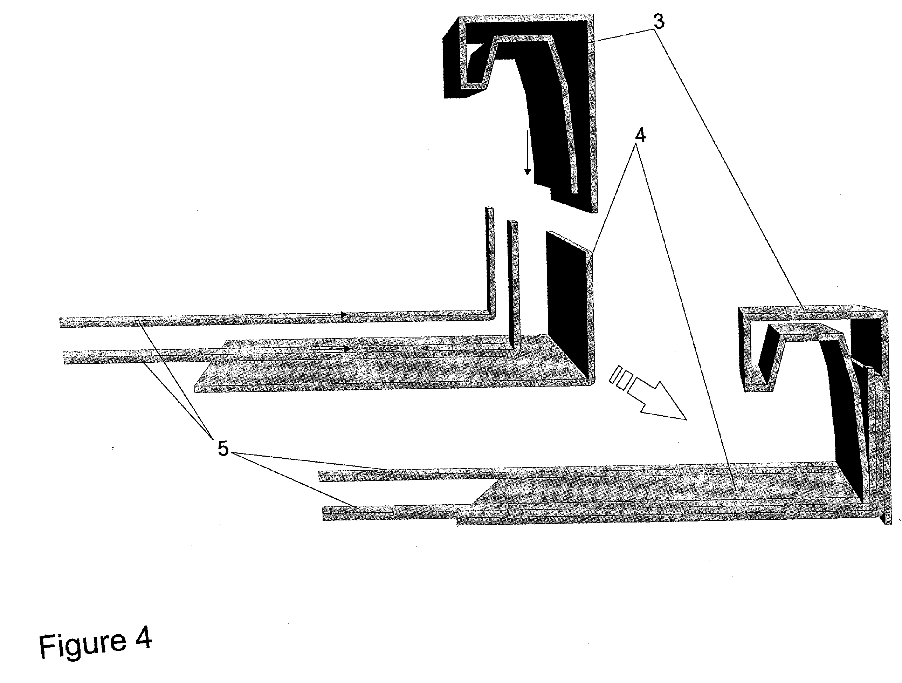

The structural solution chosen for the mechanical connection of metal framework of the hybrid detachable ventilated beehive base (1), is shown in detail in Figure 4. The bent sheets (4) and (5) are connected together in the corresponding vertical slots of the perpendicular nerves (3), thereby increasing the structural rigidity of the base.

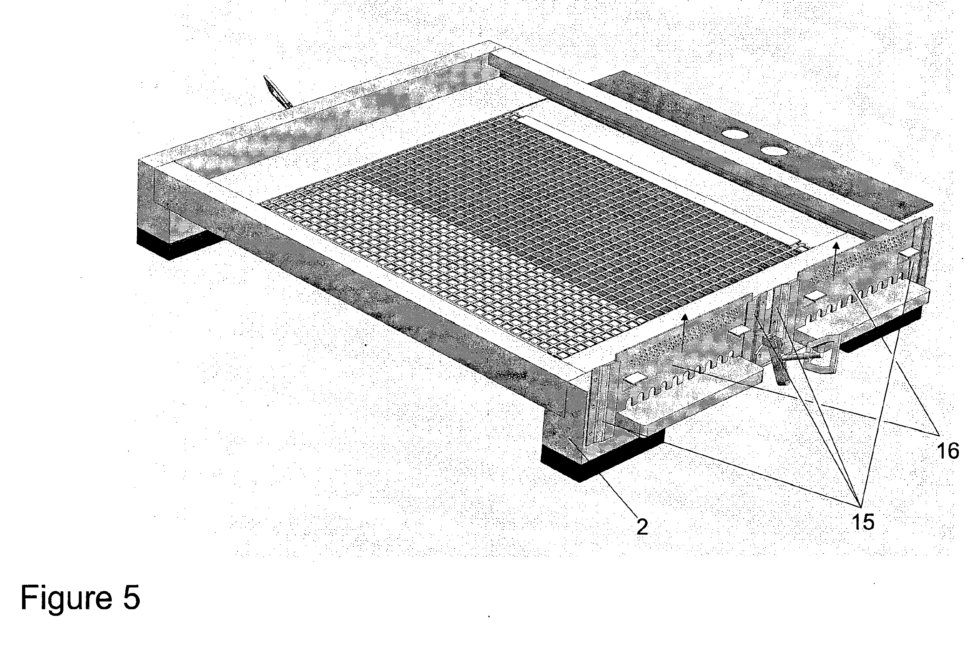

An alternative bee port handling solution is shown in Figure 5. Four curved plates (15) are screwed in pairs of two onto the wooden base (2), right and left to bee entrance ports (17), permitting the sliding movement of perforated sheets (16). The latter ones, when placed with the notches down, allow the passage of bees into the hive. A slots upward positioning of these perforated sheets (16) prevents bees from passing through, while allowing air to pass for better ventilation of the hive.

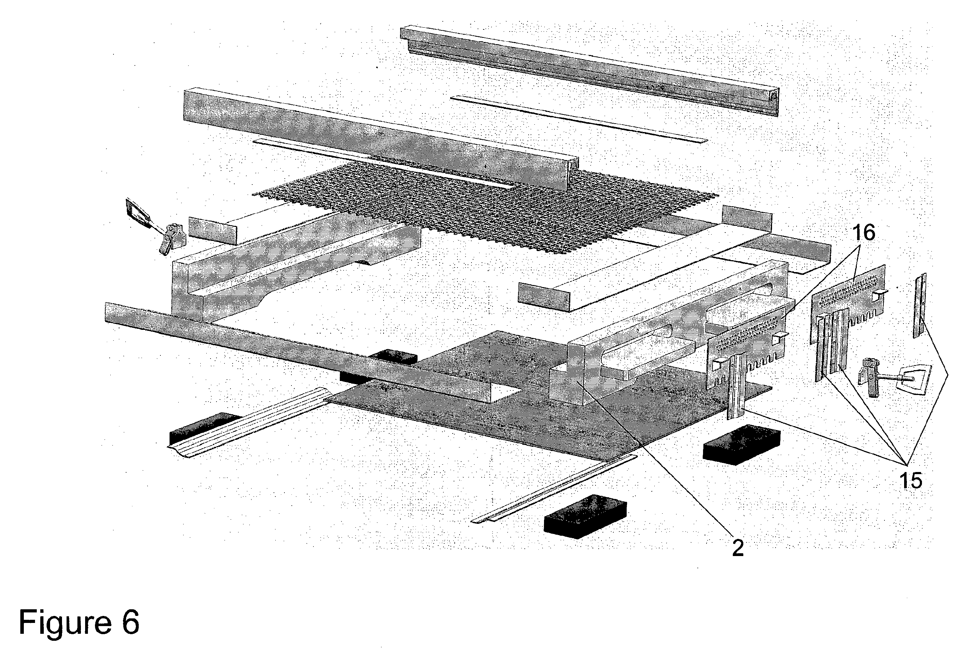

Figure 6 shows a perspective "explosion" view of the construction providing information about how the individual components, of the hybrid detachable ventilated beehive base (1), are assembled when using the alternative bee handling ports.

The dimensions and geometric characteristics of the invention are variable and can be tailored to individual needs.

## Claims

1. A «Hybrid detachable ventilated beehive base" **characterized in that**: the construction of the hybrid detachable ventilated beehive base (1) is based on the alignment of the bent sheets (4) and (5) which are then pushed into the corresponding vertical slots of the perpendicular nerves (3) to form an orthogonal and after that screwed on the two wooden bases (2); following this, plates (7) are welded onto the upper side of the horizontal bent sheets (4), providing superior support for the sieve (6); two curved sheets (14) are then welded onto the inferior surfaces of bent sheets (5) holding the sieve (6) in place, while also facilitating a sliding movement of the wooden sieve top (12); manual locks (9) are screwed onto the wooden base (2) right above the bee entrance ports (17), thus allowing the positioning and secure locking of the wooden plugs (8) to confine the bees usually during transposing the beehive; two connectors (11) placed onto the wooden base (2) allow the assembly of the hybrid vented base to the rest of the cell, while the terraces (10) in front of each door, serve as a landing platform for the bees allowing them to smoothly reach the cell before entering the hive.

2. A «Hybrid detachable ventilated beehive base", according to Claim 1, is **characterized in that** the hybrid combination of bent sheets (4) and (5), which are aligned and pushed into the vertical slots of the perpendicular nerves (3), with a wooden base (2) on which they are screwed on, results in a high mechanical strength construction.

3. A «Hybrid detachable ventilated beehive base", according to Claims 1 and 2, is **characterized in that** all the metal sheets and plates are galvanized and the two wooden bases (2) fabricated from plywood, thus providing high mechanical strength over time.

4. A «Hybrid detachable ventilated beehive base", according to Claim 1, is **characterized in that** the dimensions and geometric characteristics of the invention are variable and can be tailored to individual needs.
